# EUROPEAN PATENT SPECIFICATION

(11) **EP 2 672 295 B1**
(45) Date of publication and mention of the grant of the patent: **17.02.2021**
(21) Application number: 13171061.8
(22) Date of filing: 07.06.2013
(51) Int. Cl.: G01V 8/14, G01S 7/481, G01S 17/04

(54) **Photoelectric sensor**
Fotoelektrischer Sensor
Capteur photo-électrique

(30) Priority: 07.06.2012 JP 2012130044
(43) Date of publication of application: 11.12.2013
(73) Proprietor: OMRON CORPORATION, Kyoto-shi, Kyoto 600-8530 (JP)
(72) Inventor: Okuno, Motoharu, Kyoto-shi, Kyoto 600-8530 (JP); Komine, Shinichiro, Kyoto-shi, Kyoto 600-8530 (JP)
(74) Representative: Horn Kleimann Waitzhofer Patentanwälte PartG mbB

(56) References cited:
- DE-A1- 19 907 546
- JP-A- H0 562 236
- US-A1- 2001 055 482
- US-A1- 2009 016 193
- US-A1- 2009 268 206
- US-A1- 2010 321 669

## Description

### BACKGROUND OF THE INVENTION

### 1. TECHNICAL FIELD

The present invention generally relates to a photoelectric sensor, and more particularly, relates to a photoelectric sensor of coaxial retro-reflective type.

### 2. RELATED ART

Regarding conventional photoelectric sensors, for example, JP 2009-289739 A discloses a coaxial retro-reflective type photoelectric sensor aiming at realizing improved detection accuracy.

The photoelectric sensor disclosed in JP 2009-289739 A includes a light-emitting diode for generating detection light, a lens for converting the detection light into parallel light and for projecting, to the outside, the parallel light as outward detection light, a half mirror for separating the optical path of the detection light from returned light from a retro-reflective plate, and a photodiode for receiving the returned light from the half mirror. The lens includes a convex surface, and a flat surface inclined with respect to the vertical direction, with respect to an axis connecting the light-emitting diode to the center portion of the convex surface.

Further, JP 2008-112629 A discloses a retro-reflective type photoelectric sensor which is adapted to convert a birefringence characteristic of a PET bottle into light attenuation, in order to improve the detection stability, and in order to alleviate the problem of reflected light from the PET bottle.

The retro-reflective type photoelectric sensor disclosed in JP 2008-112629 A includes a sensor main body which is formed with a light projection system for projecting circularly-polarized light and a light reception system for selectively receiving inverse-circularly polarized light when light containing a mixture of inverse-circularly polarized light and circularly-polarized light is entered thereto, and a retro-reflection portion for converting the circularly-polarized light into light containing inverse-circularly polarized light to be reflected. The sensor main body includes a light projecting element, a light receiving element, a 1/4-wavelength plate for converting vertically-polarized light into circularly-polarized light and for converting inverse-circularly polarized light into vertically-polarized light, and a light polarization filter. The light polarization filter is placed between the light receiving element and the 1/4-wavelength plate, on the light reception path from the retro-reflection portion up to the light receiving element, and is adapted to selectively pass vertically-polarized light therethrough.

As disclosed in the aforementioned patent documents, as a photoelectric sensor for use in detecting the presence or absence of an object, a reflective-type photoelectric sensor utilizing light reflection have been employed. Such reflective-type photoelectric sensor includes those called retro-reflective type photoelectric sensor.

In general, a retro-reflective type photoelectric sensor includes a light projecting/receiving device incorporating a light emitting element and a light receiving element. In using such a sensor, a retro-reflective plate for reflecting light generated from the light projecting/receiving device to return it back to the light projecting/receiving device is placed, so as to be faced to the light projecting/receiving device. When no object exists on the optical path of the light emitted from the light emitting element, the light is reflected by the retro-reflective plate to enter the light receiving element. On the other hand, when an object exists on the optical path, the light emitted from the light emitting element is intercepted by the object, and therefore, is prevented from entering the light receiving element. Namely, the amount of light received by the light receiving element is varied depending on whether or not an object exists on the optical path. Therefore, the retro-reflective type sensor detects the presence or absence of an object, based on the variation of the amount of light received by the light receiving element.

Further, the retro-reflective type photoelectric sensor includes those of double-lens type and coaxial type. Those of double-lens type include a light projection path and a light reception path which are physically separated from each other. On the other hand, those of coaxial type include a light projection path and a light reception path which are substantially coincident with each other, wherein these optical paths are separated from each other through an optical device such as a light polarization beam splitter or a half mirror.

However, in a case of such coaxial retro-reflective type photoelectric sensor, since the light projection path and the light reception path are not physically separated from each other, a portion of light generated from the light projecting element may happen to enter the light receiving element as stray light. This results in the occurrence of concerns about degradation of detection accuracy of the photoelectric sensor.

US 2001/0055482 A1 discloses a camera with through-the lens lighting, comprising a light source that produces incoherent light; a photosensitive surface; focusing optics, having an optical axis, that forms an image of a scene, within a field of view, on the photosensitive surface, wherein the light is boresighted with the optical axis and directed toward the scene, illuminating substantially only the field of view of the camera.

US 2009/0016193A1 discloses a light blocking unit including a plate-like member which is different from a housing member, and a light blocking portion formed on the plate-like member, for blocking light. A light detector has a light receiving portion for receiving light which is partitioned into four divided regions, by a Y-axis-wise parting line and an X-axis-wise parting line in X-Y coordinates, and outputs photoelectric output signals for the respective divided regions in accordance with intensity of the light received by the respective divided regions of the light receiving portion.

### SUMMARY

Therefore, it is an object of the present invention to overcome the OMRON Corporation
aforementioned problem and to provide a photoelectric sensor with excellent detection accuracy.

The invention relates to a photoelectric sensor according to claim 1. With the photoelectric sensor having the aforementioned structure, in comparison with a case where the light shielding member is provided on the optical path between the optical-path separation portion and the light projecting unit or the light receiving unit, the light shielding member is provided at a position farther from the light projecting unit or the light receiving unit. Therefore, in installing the light shielding member such that it overlaps the optical axis of the detection light or the returned light, it is possible to eliminate the necessity of higher positioning accuracy.

Furthermore, because of the reflection surface extending in an oblique direction with respect to the optical axis of the detection light proceeding toward the lens from the optical-path separation portion, it is possible to prevent the detection light reflected by the reflection surface of the light shielding member from forming stray light proceeding toward the light receiving unit.

Further, preferably, the light shielding member is provided near the lens. With the photoelectric sensor having the aforementioned structure, the detection light reflected by the lens can be certainly prevented from proceeding toward the light receiving unit, as stray light.

Further, preferably, the light shielding member is placed such that the center of a light-shielded area for the detection light, which is formed by the light shielding member, is coincident with a center axis of the lens. With the photoelectric sensor having the aforementioned structure, even though the light shielding member has the reflection surface extending in an oblique direction with respect to the optical axis of the detection light which proceeds toward the lens from the optical-path separation portion, the optical axis of the detection light which enters the lens without being intercepted by the light shielding member can be made coincident with the center axis of the lens.

Further, preferably, the light shielding member is colored in black. With the photoelectric sensor having the aforementioned structure, it is possible to inhibit the detection light or the returned light from being reflected by the light shielding member to form stray light.

Further, preferably, the photoelectric sensor further includes a support member adapted to support the optical-path separation portion on the optical path between the lens and the light projecting unit and the light receiving unit. The light shielding member is formed integrally with the support member. With the photoelectric sensor having the aforementioned structure, it is possible to suppress the increase of the number of members, thereby simplifying the structure of the photoelectric sensor.

Further, preferably, the support member is provided with a slit which is placed in such a way as to face the light projecting unit, and further, is adapted to pass therethrough, the detection light proceeding toward the optical-path separation portion from the light projecting unit. With the photoelectric sensor having the aforementioned structure, it is possible to further simplify the structure of the photoelectric sensor.

Further, preferably, the light shielding member is formed integrally with the lens. With the photoelectric sensor having the aforementioned structure, it is possible to suppress the increase of the number of members, thereby simplifying the structure of the photoelectric sensor.

As described above, according to the present invention, it is possible to provide a photoelectric sensor with excellent detection accuracy.

### BRIEF DESCRIPTION OF THE DRAWINGS

Fig. 1 is a view of the entire structure of a photoelectric sensor according to a first embodiment of the present invention;
Fig. 2 is a cross-sectional view illustrating a sensor head in the photoelectric sensor in Fig. 1;
Fig. 3 is a cross-sectional view illustrating a photoelectric sensor in a comparative example, in a state where there is induced stray light entering a photodiode;
Fig. 4 is a view illustrating, in an enlarging manner, an optical path of detection light between a half mirror and a light projection/reception lens in Fig. 2;
Fig. 5 is a perspective view illustrating the internal structure of the sensor head in the photoelectric sensor in Fig. 2;
Fig. 6 is a perspective view illustrating a support case included in the sensor head in the photoelectric sensor in Fig. 2;
Figs. 7A and 7B are side views illustrating a modification example of the light projection/reception lens in Fig. 2;
Fig. 8 is a cross-sectional view illustrating a first modification example of a light shielding member in Fig. 2;
Fig. 9 is a cross-sectional view illustrating a second modification example of the light shielding member in Fig. 2;
Fig. 10 is a cross-sectional view illustrating a third modification example of the light shielding member in Fig. 2; and
Fig. 11 is a cross-sectional view illustrating a fourth modification example of the light shielding member in Fig. 2.

### DETAILED DESCRIPTION

Embodiments of the present invention will be described, with reference to the drawings. Here, throughout the drawings to which references will be made hereinafter, the same or corresponding members are designated by the same reference numerals.

### (First Embodiment)

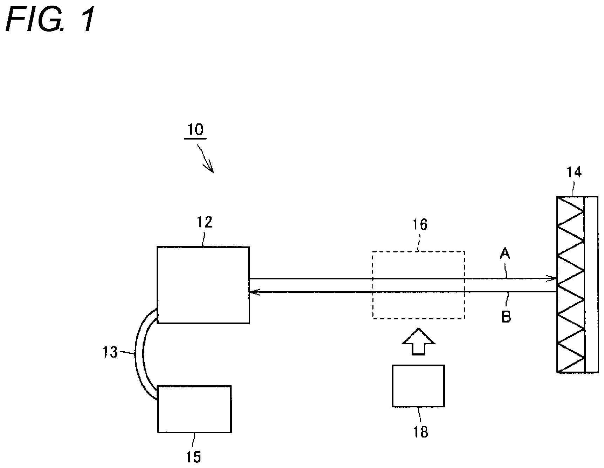

Fig. 1 is a view of the entire structure of a photoelectric sensor according to a first embodiment of the present invention. Referring to Fig. 1, the entire structure of the photoelectric sensor 10 will be described, first. The photoelectric sensor 10 includes a sensor head 12 and a retro-reflective plate 14.

The sensor head 12 generates detection light A. The retro-reflective plate 14 is placed oppositely to the sensor head 12. The detection light A emitted from the sensor head 12 is reflected by the retro-reflective plate 14 to form returned light B. Further, the detection light A is visible light, for example, but it may be any light which can be retro-reflected by the retro-reflective plate 14, wherein the wavelength range thereof is not particularly limited.

In the retro-reflective plate 14, there are placed a plurality of corner cubes. The detection light A is reflected by three surfaces in the retro-reflective plate 14 and finally forms returned light B. The returned light B, which is light in the axial direction similarly to the detection light A, proceeds in the opposite direction from the direction in which the detection light A proceeds, through a path parallel to the path of the detection light A.

The sensor head 12 receives the returned light B and creates an electric signal with an intensity corresponding to the amount of received light of the returned light B. The sensor head 12 is connected to an amplifier unit 15 through a cable 13 integrally including a power-supply line, a signal line and the like. Further, the sensor head 12 outputs the created electric signal to the amplifier unit 15, through the cable 13.

Further, in the photoelectric sensor illustrated in Fig. 1, the sensor head 12 and the amplifier unit 15 are provided separately from each other, but the sensor head 12 may incorporate an amplifier.

The amplifier unit 15 supplies a driving voltage to the sensor head 12 through the cable 13. By receiving the driving voltage, the sensor head 12 generates the detection light A, and also creates an electric signal indicative of the amount of received light of the returned light B. Further, the amplifier unit 15 receives the signal from the sensor head 12 through the cable 13. The amplifier unit 15 detects the presence or absence of an object based on this signal, and also outputs a signal indicative of the amount of light received by the sensor head 12.

The photoelectric sensor 10 detects the presence or absence of an object, based on the amount of light received by the sensor head 12. When an object 18 to be measured is not positioned in an area 16 on the optical path of the detection light A, the detection light A emitted from the sensor head 12 is reflected by the retro-reflective plate 14 to form returned light B to be entered to the sensor head 12. On the other hand, when the object 18 to be measured is positioned in the area 16, the detection light A from the sensor head 12 is intercepted by the object 18 to be measured, which causes the returned light B to be received by the sensor head 12 in a reduced amount of light.

Thus, the amount of light received by the sensor head 12 is varied depending on whether or not an object 18 to be measured is positioned in the area 16, and therefore, the photoelectric sensor 10 detects the presence or absence of an object based on the amount of light received by the sensor head. The amplifier unit 15 receives an electric signal indicative of the amount of received light from the sensor head 12, and further, compares the amount of received light with a predetermined threshold value for detecting the presence or absence of an object 18 to be measured in the area 16.

The photoelectric sensor 10 according to the present embodiment is a coaxial retro-reflective type photoelectric sensor having a light projection path and a light reception path, which are separated from each other by an optical device provided inside the sensor head 12. Subsequently, the photoelectric sensor 10 will be described, in more detail, with respect to the structure thereof.

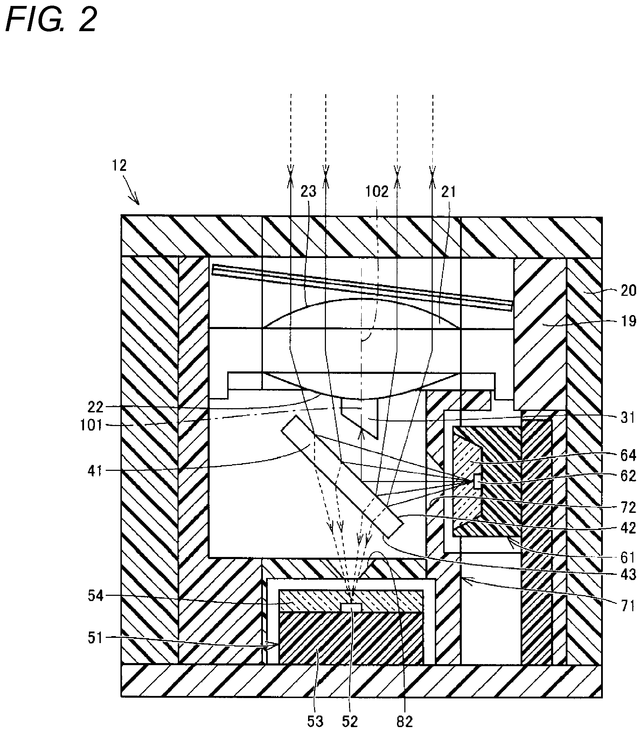

Fig. 2 is a cross-sectional view illustrating the sensor head in the photoelectric sensor in Fig. 1. Referring to Fig. 2, the sensor head 12 in the photoelectric sensor 10 includes a light-emitting diode 61, a photodiode 51, a light projection/reception lens 21, a half mirror 41, a case 20, and a holder 19.

The case 20 is a casing which forms the external appearance of the sensor head 12. The holder 19 is housed within the case 20. The light-emitting diode 61, the photodiode 51, the light projection/reception lens 21, and the half mirror 41 are housed within the holder 19.

The light-emitting diode 61 is provided as a light projecting unit for generating detection light. In Fig. 2, paths of the detection light from the light-emitting diode 61 are indicated by solid-line arrows. The light-emitting diode 61 includes a light-emitting diode chip 62 for generating detection light, and a translucent resin layer 64 which seals the light-emitting diode chip 62.

The photodiode 51 is provided as a light receiving unit for receiving the returned light. In Fig. 2, paths of the returned light which proceeds toward the photodiode 51 after being reflected by the retro-reflective plate 14 are indicated by dotted-line arrows (see Fig. 1). The photodiode 51 includes a base member 53, a photodiode chip 52 which is mounted on the main surface of the base member 53 and is adapted to receive the returned light, and a translucent resin layer 54 which seals the photodiode chip 52 on the main surface of the base member 53.

The light projection/reception lens 21 has a center axis 102 which forms an optical axis of the lens. The light projection/reception lens 21 has a lens surface 22, and a lens surface 23 which is placed in the opposite side from the lens surface 22. In the present embodiment, the lens surface 22 and the lens surface 23 both have convex surfaces. The detection light from the light-emitting diode 61 enters the light projection/reception lens 21 through the lens surface 22 and exits from the light projection/reception lens 21 through the lens surface 23. The returned light reflected by the retro-reflective plate 14 enters the light projection/reception lens 21 through the lens surface 23 and exits from the light projection/reception lens 21 through the lens surface 22. The tangential planes on the lens surface 22 and on the lens surface 23 at the positions at which the center axis 102 penetrates therethrough are planes orthogonal to the center axis 102.

The photodiode 51 is faced to the light projection/reception lens 21 with an interval interposed therebetween. The photodiode 51 and the light projection/reception lens 21 are placed oppositely to each other. The lens surface 22 is faced to the photodiode 51.

The light-emitting diode 61 is placed on a straight line orthogonal to the line extended from the center axis 102 of the light projection/reception lens 21. In the axial direction of the center axis 102, the light-emitting diode 61 is placed between the light projection/reception lens 21 and the photodiode 51.

The half mirror 41 is placed on the optical path of the detection light between the light-emitting diode 61 and the light projection/reception lens 21 (the light projection path), which is on the optical path of the returned light between the light projection/reception lens 21 and the photodiode 51 (the light reception path). The half mirror 41 is provided as an optical-path separation portion for separating the optical path of the detection light which proceeds toward the light projection/reception lens 21 from the light-emitting diode 61, from the optical path of the returned light which proceeds toward the photodiode 51 from the light projection/reception lens 21.

The half mirror 41 has a mirror surface 42, and a mirror surface 43 which is placed in the opposite side from the mirror surface 42. The half mirror 41 is obliquely provided, such that the mirror surface 42 and the mirror surface 43 extend in an oblique direction with respect to the center axis 102 of the light projection/reception lens 21. The light-emitting diode 61 and the light projection/reception lens 21 are placed on the side closer to the mirror surface 42, between the mirror surface 42 and the mirror surface 43, while the photodiode 51 is placed on the side closer to the mirror surface 43, between the mirror surface 42 and the mirror surface 43.

The detection light from the light-emitting diode 61 is reflected by the mirror surface 42 of the half mirror 41 to be changed in optical axis by about 90 degrees, and further, proceeds toward the light projection/reception lens 21. The returned light exited from the light projection/reception lens 21 proceeds in the opposite direction from that of the detection light and proceeds toward the half mirror 41. The returned light passes through the mirror surface 42 and the mirror surface 43 in the mentioned order to pass through the half mirror 41. At this time, due to the thickness of the half mirror 41, the optical axis of the returned light is moved, in parallel, by a certain amount, between before/after it has passed through the half mirror 41 (the optical axis of the returned light has been moved in the right-to-left direction in Fig. 2). The returned light having passed through the half mirror 41 proceeds toward the photodiode 51.

In the present embodiment, the optical axis of the detection light which exits from the light-emitting diode 61 and proceeds toward the half mirror 41 is orthogonal to the optical axis 101 of the detection light which proceeds toward the light projection/reception lens 21 from the half mirror 41. Further, the optical axis 101 of the detection light which proceeds toward the light projection/reception lens 21 from the half mirror 41, the center axis 102 of the light projection/reception lens 21, and the optical axis of the returned light which exits from the light projection/reception lens 21 and proceeds toward the half mirror 41 are placed on the same straight line. Further, the optical axis of the returned light which exits from the light projection/reception lens 21 and proceeds toward the half mirror 41 is parallel to the optical axis of the returned light which proceeds toward the photodiode 51 from the half mirror 41.

Between the half mirror 41 and the light-emitting diode 61, at a position just above the light-emitting diode chip 62, a slit 72 is formed. The slit 72 is provided as a circular-shaped opening portion, and the center of the opening is overlapped with the optical axis of the detection light which proceeds toward the half mirror 41 from the light-emitting diode 61. The detection light from the light-emitting diode 61 proceeds toward the half mirror 41 by passing though the slit 72.

Between the half mirror 41 and the photodiode 51, at a position just above the photodiode chip 52, a slit 72 is formed. The slit 72 is provided as a circular-shaped opening portion, and the center of the opening is overlapped with the optical axis of the returned light which proceeds toward the photodiode 51 from the half mirror 41. The returned light having passed through the half mirror 41 proceeds toward the photodiode 51 by passing though the slit 72. The area of the returned light irradiated to the photodiode 51 is defined by the slit 72.

In the present embodiment, the sensor head 12 in the photoelectric sensor 10 further includes a light shielding member 31 which partially intercepts the detection light or the returned light within the case 20. The light shielding member 31 is formed from a member capable of intercepting the proceeding of the detection light and the returned light. Preferably, the light shielding member 31 is colored in black. The light shielding member 31 is provided such that it is overlapped with the optical axis of the detection light or the returned light, at any position on the optical path of the detection light between the light projection/reception lens 21 and the light-emitting diode 61 and on the optical path of the returned light between the light projection/reception lens 21 and the photodiode 51.

In the present embodiment, the light shielding member 31 is provided on the optical path of the detection light, between the light projection/reception lens 21 and the light-emitting diode 61. The light shielding member 31 is provided on the optical path of the detection light, between the light projection/reception lens 21 and the half mirror 41.

The light shielding member 31 is provided near the light projection/reception lens 21. The light shielding member 31 is provided at a position closer to the light projection/reception lens 21 than to the half mirror 41, on the optical path of the detection light between the light projection/reception lens 21 and the half mirror 41. The light shielding member 31 is provided in contact with the light projection/reception lens 21 (the lens surface 22). The light shielding member 31 is provided as a member separated from the light projection/reception lens 21.

The light shielding member 31 is provided such that it is overlapped with the optical axis of the detection light which proceeds toward the light projection/reception lens 21 from the light-emitting diode 61. The light shielding member 31 is provided such that it is overlapped with the optical axis 101 of the detection light which proceeds toward the light projection/reception lens 21 from the half mirror 41. The light shielding member 31 is provided such that the optical axis 101 of the detection light which proceeds toward the light projection/reception lens 21 from the half mirror 41 penetrates the light shielding member 31.

The light shielding member 31 is provided in such a way as to partially intercept the detection light which proceeds toward the light projection/reception lens 21 from the light-emitting diode 61. Namely, the cross-sectional area of the detection light which is taken along a plane orthogonal to the optical axis of the detection light, at the position where the light shielding member 31 is provided, is larger than the cross-sectional area of the light shielding member 31 which is taken along the same plane. The detection light partially intercepted by the light shielding member 31 is caused to enter the light projection/reception lens 21, while having a ring shape.

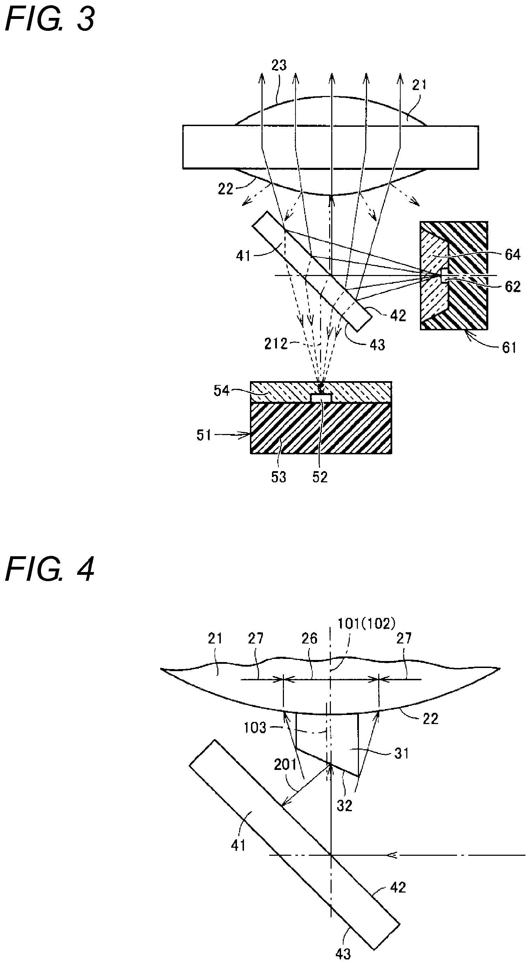

Fig. 3 is a cross-sectional view illustrating a photoelectric sensor in a comparative example, in a state where there is induced stray light entering a photodiode. Referring to Fig. 3, in the present comparative example, in comparison with the photoelectric sensor 10 according to the present embodiment in Fig. 2, no light shielding member 31 is provided on the optical path of detection light between a light projection/reception lens 21 and a half mirror 41.

The detection light exited from a light-emitting diode 61 and reflected by the half mirror 41 enters the light projection/reception lens 21. At this time, the detection light is partially reflected by the lens surface 22 of the light projection/reception lens 21, thereby inducing reflected light. The reflected light proceeds in direction in which it gets farther away from the light projection/reception lens 21 at an angle of reflection which is equal to the incident angle to the lens surface 22. Therefore, out of the detection light proceeding toward the light projection/reception lens 21 from the half mirror 41, the portion proceeding on the optical axis 101 is reflected by the light projection/reception lens 21, and thus, proceeds on the optical axis 101, again. In the present comparative example, the reflected light proceeding in the opposite direction on the optical axis 101 as described above (the reflected light indicated by arrows 212 in Fig. 3) forms stray light entering the photodiode 51.

Referring to Fig. 2, on the contrary, in the photoelectric sensor 10 according to the present embodiment, the light shielding member 31 for partially intercepting the detection light is provided in such a way as to overlap the optical axis 101 of the detection light, on the optical path of the detection light, between the light projection/reception lens 21 and the half mirror 41.

With this structure, the portion overlapping the optical axis 101, out of the detection light proceeding toward the light projection/reception lens 21 from the half mirror 41, is prevented from proceeding by the light shielding member 31. This prevents the occurrence of reflected light proceeding toward the photodiode 51 in the opposite direction, on the optical axis 101. This prevents the reflected light induced by the light projection/reception lens 21 from forming stray light entering the photodiode 51. On the other hand, at the position coincident with the outer periphery of the light shielding member 31 when viewed from the optical axis 101, there are secured paths for the detection light and the returned light between the half mirror 41 and the light projection/reception lens 21, which enables detecting the presence or absence of an object to be measured, based on the detection light and the returned light proceeding through these paths.

Further, although, in the aforementioned description, there has been described reflected light reflected by the lens surface 22 of the light projection/reception lens 21, reflected light is also induced by reflection at the lens surface 23 inside the light projection/reception lens 21. The light shielding member 31 also prevents such reflected light induced inside the light projection/reception lens 21 from proceeding to the photodiode 51.

The light shielding member 31 will be subsequently described, with respect to the structure thereof. Fig. 4 is a view illustrating, in an enlarging manner, the optical path of the detection light between the half mirror and the light projection/reception lens in Fig. 2.

Referring to Fig. 2 and Fig. 4, the light shielding member 31 has a cylindrical-column shape along the axial direction of the optical axis 101 of the detection light which proceeds toward the light projection/reception lens 21 from the half mirror 41. The light shielding member 31 has a shape which extends in a cylindrical-column shape from the lens surface 22 of the light projection/reception lens 21 along the axial direction of the center axis 102 of the light projection/reception lens 21. The light shielding member 31 has a circular-shaped cross section which is taken along a plane orthogonal to the optical axis of the detection light which proceeds toward the light projection/reception lens 21 from the light-emitting diode 61.

The light shielding member 31 has a reflection surface 32. The reflection surface 32 is placed in such a way as to be spaced apart from the half mirror 41. The reflection surface 32 reflects the detection light proceeding toward the light projection/reception lens 21 from the half mirror 41.

The reflection surface 32 extends in an oblique direction with respect to the optical axis 101 of the detection light which proceeds toward the light projection/reception lens 21 from the half mirror 41 (the center axis 102 of the light projection/reception lens 21). The reflection surface 32 extends in an oblique direction with respect to the optical axis of the returned light which exits from the light projection/reception lens 21 and proceeds toward the photodiode 51 by passing through the half mirror 41. The reflection surface 32 is formed such that it is inclined toward the opposite side from the light-emitting diode 61 with reference to a plane orthogonal to the optical axis 101 of the detection light. The reflection surface 32 is preferably mirror-finished.

It is assumed that a portion of the detection light which has been prevented from proceeding to the light projection/reception lens 21 by the light shielding member 31 is reflected by the reflection surface 32. Even in this case, since the reflection surface 32 is formed to be an inclined surface extending in an oblique direction with respect to the optical axis 101 of the detection light, the detection light reflected by the reflection surface 32 proceeds in a direction deviated from the axial direction of the optical axis 101 of the detection light, as indicated by an arrow 201. This can prevent the detection light reflected by the reflection surface 32 from proceeding toward the photodiode 51 to form stray light.

In Fig. 4, there are illustrated a light-shielded area 26 which is not irradiated with the detection light due to the light shielding by the light shielding member 31, and an irradiation area 27 which is positioned around the outer periphery of the light-shielded area 26 when viewed from the center axis 102 of the light projection/reception lens 21, and thus is irradiated with the detection light, on the lens surface 22 of the light projection/reception lens 21. Since the reflection surface 32 is formed to be an inclined surface extending in an oblique direction with respect to the optical axis 101 of the detection light, the light-shielded area 26 is made to be an asymmetric area in the opposite sides of the center axis 103 of the light shielding member 31 having the cylindrical-column shape. In the present embodiment, the center axis 103 of the light shielding member 31 is placed such that its core is slightly deviated from the center axis 102 of the light projection/reception lens 21, so that the center of the light-shielded area 26 for the detection light, which is formed by the light shielding member 31, is made coincident with the center axis 102 of the light projection/reception lens 21.

Further, although, in the present embodiment, the reflection surface 32 of the light projection/reception lens 21 is formed to be an inclined surface extending in an oblique direction with respect to the optical axis 101 of the detection light, the present invention is not limited thereto, and the reflection surface 32 may be also provided as a flat surface orthogonal to the optical axis 101 of the detection light. In this case, the reflection surface 32 can be provided with a concave-and-convex shape, which can inhibit the reflected light induced by reflection of the detection light by the reflection surface 32 from proceeding toward the photodiode 51.

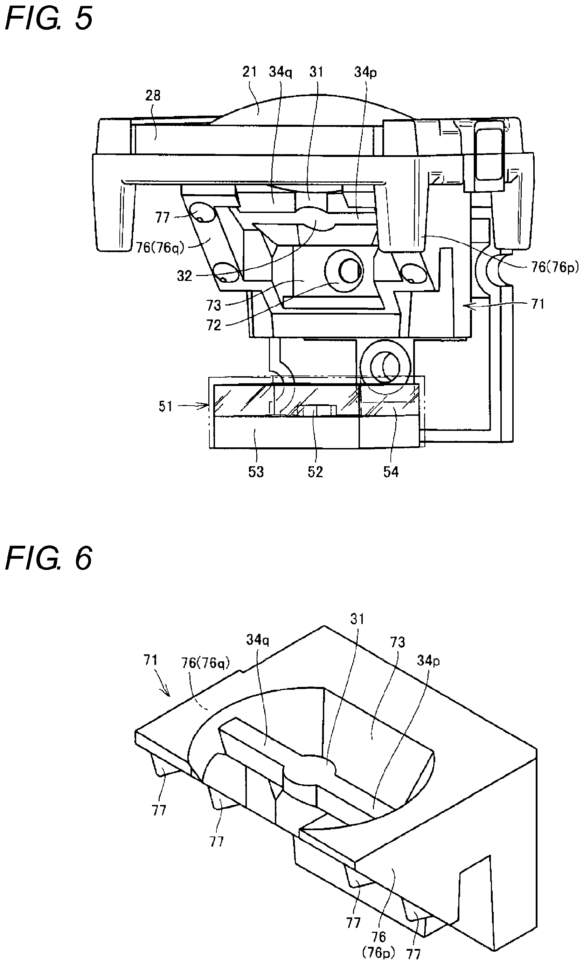

Fig. 5 is a perspective view illustrating the internal structure of the sensor head in the photoelectric sensor in Fig. 2. Fig. 6 is a perspective view illustrating a support case included in the sensor head in the photoelectric sensor in Fig. 2.

Referring to Figs. 2, 5 and 6, the sensor head 12 in the photoelectric sensor 10 further includes the support case 71. The support case 71 is provided as a support member for supporting the half mirror 41 on the optical paths of the detection light and the returned light, within the case 20. In the present embodiment, the light shielding member 31 is formed integrally with the support case 71, and the slit 72 is formed in the support case 71.

More specifically, the support case 71 includes, as constituent components thereof, a half-mirror support portion 76p and a half-mirror support portion 76q (hereinafter, which will be referred to as a half-mirror support portion 76, unless otherwise distinguished), a slit formation portion 73, and the light shielding member 31. The support case 71 is made of a resin material with a black color (for example, an ABS resin).

The slit formation portion 73 has a flat-plate shape. The slit formation portion 73 is placed such that it is faced to the light-emitting diode 61. The slit formation portion 73 is placed between the light-emitting diode 61 and the half mirror 41. The slit formation portion 73 is provided with the slit 72, which has been previously described, in the form of a through hole.

The half-mirror support portion 76 is formed from the slit formation portion 73 to extend in a two-branched shape in a direction in which it gets farther away from the light-emitting diode 61. On the tip portion extending from the half-mirror support portion 76, there is formed a plurality of protruding portions 77 for placing the half mirror 41 thereon, such that they are spaced apart from each other. On the half-mirror support portion 76p, there is formed a rib portion 34p extending in a rib shape toward the half-mirror support portion 76q. On the half-mirror support portion 76q, there is formed a rib portion 34q extending in a rib shape toward the half-mirror support portion 76p. The light shielding member 31 is supported in the space between the half-mirror support portion 76p and the half-mirror support portion 76q, in a way of being supported by the rib portion 34p and the rib portion 34q.

With this structure, the light shielding member 31 is formed integrally with the support case 71 for supporting the half mirror 41, and also, the slit 72 is formed therein, which can reduce the number of members in the sensor head 12, thereby reducing the fabrication cost for the photoelectric sensor 10. Further, the present invention is not limited to such an integrated structure, and the light shielding member 31 can be also provided solely and separately from the support case 71.

The photoelectric sensor 10 according to the first embodiment of the present invention, which has been described above, will be comprehensively described, with respect to the structure thereof. The photoelectric sensor 10 according to the present embodiment includes the light-emitting diode 61 as a light projecting unit for generating detection light, the photodiode 51 as a light receiving unit for receiving returned light having been returned thereto due to the reflection of the detection light outside, the light projection/reception lens 21 as a lens which is adapted to exit the detection light from the light-emitting diode 61 to the outside and is adapted such that the returned light from the outside enters there, the half mirror 41 as an optical-path separation portion which is provided on the optical path between the light projection/reception lens 21 and the light-emitting diode 61 and the photodiode 51, and further, is adapted to separate the optical path of the detection light which proceeds toward the light projection/reception lens 21 from the light-emitting diode 61, from the optical path of the returned light which proceeds toward the photodiode 51 from the light projection/reception lens 21, and the light shielding member 31 for partially intercepting the detection light or the returned light, wherein the light shielding member 31 is provided in such a way as to overlap the optical axis of the detection light or the returned light, at any position on the optical path between the light projection/reception lens 21 and the light-emitting diode 61 and the photodiode 51.

With the photoelectric sensor 10 having the aforementioned structure according to the first embodiment of the present invention, the light shielding member 31 prevents a portion of the detection light generated from the light-emitting diode 61 from entering the photodiode 51, as stray light. This can improve the accuracy of detection of the presence or absence of an object to be measured, by the photoelectric sensor 10.

Further, although, in the present embodiment, the half mirror 41 is employed as the optical-path separation portion for separating the optical path of the detection light which proceeds toward the light projection/reception lens 21 from the light-emitting diode 61, from the optical path of the returned light which proceeds toward the photodiode 51 from the light projection/reception lens 21, it is also possible to provide a beam splitter for reflecting a portion of light entered thereto while passing an other portion thereof therethrough, instead of the half mirror 41.

Also, the light-emitting diode 61 and the photodiode 51 in Fig. 2 can be placed such that they are interchanged with each other, so as to form a photoelectric sensor. In this case, the half mirror 41 should be structured, such that the detection light from the light-emitting diode 61 proceeds toward the light projection/reception lens 21 by passing through the half mirror 41, while the returned light from the light projection/reception lens 21 proceeds toward the photodiode 51 by being reflected by the half mirror 41.

### (Second Embodiment)

In the present embodiment, there will be described various types of modification examples of the photoelectric sensor 10 according to the first embodiment.

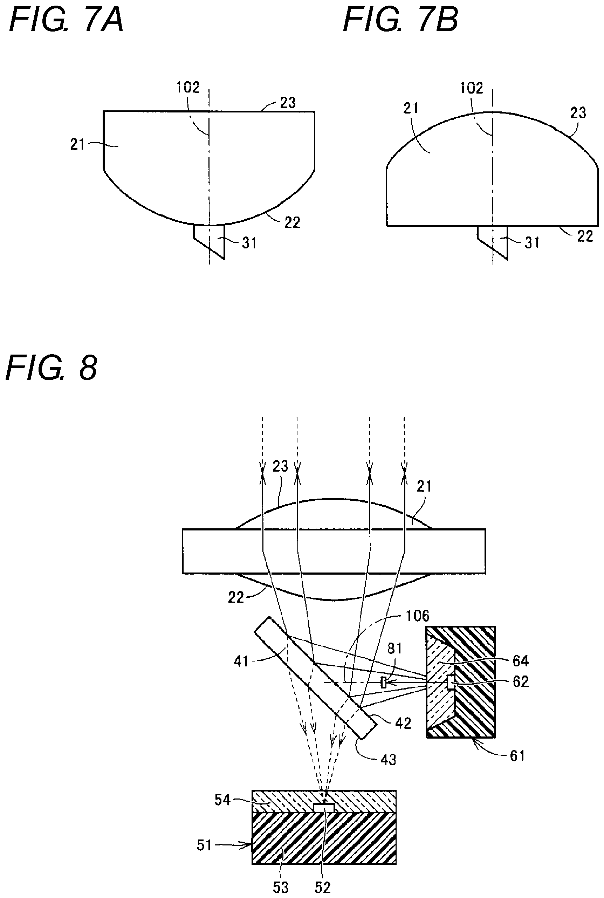

Figs. 7A and 7B are a side views illustrating a modification example of the light projection/reception lens in Fig. 2. Referring to Fig. 7, the lens surface 22 and the lens surface 23 of the light projection/reception lens 21 are not limited to convex surfaces.

As illustrated in Fig. 7A, the lens surface 22 may be a convex surface, while the lens surface 23 may be a flat surface orthogonal to the center axis 102. Also, as illustrated in Fig. 7B, the lens surface 22 may be a flat surface orthogonal to the center axis 102, while the lens surface 23 may be a convex surface. Further, as the light projection/reception lens 21, a Fresnel lens having lens surfaces with sawtooth-shaped cross sections may be used.

Figs. 8 to 10 are cross-sectional views illustrating modification examples of the light shielding member in Fig. 2 which do not belong to the invention. Referring to Fig. 8, in the present modification example, a light shielding member 81 is provided, instead of the light shielding member 31 in Fig. 2. The light shielding member 81 is provided on the optical path of the detection light, between the light projection/reception lens 21 and the light-emitting diode 61. The light shielding member 81 is provided on the optical path of the detection light, between the half mirror 41 and the light projection/reception lens 21.

The light shielding member 81 is provided, such that it overlaps the optical axis of the detection light which proceeds toward the light projection/reception lens 21 from the light-emitting diode 61. The light shielding member 81 is provided such that it overlaps the optical axis 106 of the detection light which proceeds toward the half mirror 41 from the light-emitting diode 61. The light shielding member 81 is provided in such a way as to partially intercept the detection light which proceeds toward the light projection/reception lens 21 from the light-emitting diode 61.

In comparison with the first embodiment in Fig. 2, in the modification example illustrated in Fig. 8, the light shielding member 81 is provided at a position closer to the light-emitting diode chip 62. In this case, the cross-sectional area of the detection light at the position where the light shielding member 81 is provided is smaller, which necessitates higher positioning accuracy, in positioning the light shielding member 81 such that it overlaps the optical axis 106. From this viewpoint, the light shielding member 81 is preferably provided on the optical axis of the detection light between the half mirror 41 and the light projection/reception lens 21 and is more preferably provided near the light projection/reception lens 21.

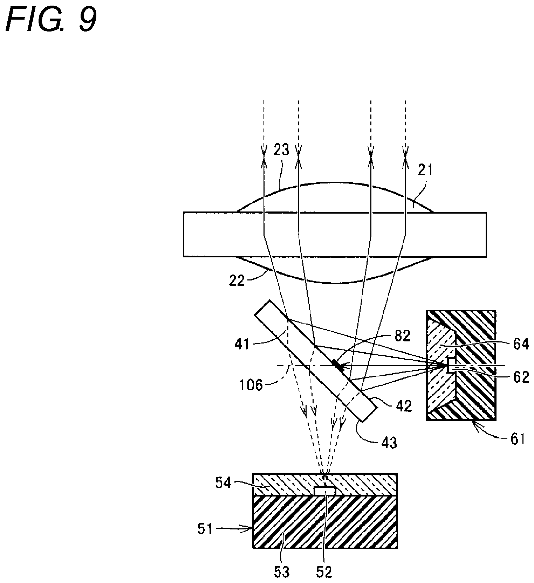

Referring to Fig. 9, in the present modification example, a light shielding member 82 is provided, instead of the light shielding member 31 in Fig. 2. The light shielding member 82 is provided on the optical axis of the detection light, between the light projection/reception lens 21 and the light-emitting diode 61. The light shielding member 82 is provided on the mirror surface 42 of the half mirror 41. The light shielding member 82 is formed by coloring the mirror surface 42 in a black color, at its surface, with a coating material.

The light shielding member 82 is provided such that it overlaps the optical axis of the detection light which proceeds toward the light projection/reception lens 21 from the light-emitting diode 61. The light shielding member 82 is provided at the position where the optical axis 106 of the detection light which proceeds toward the half mirror 41 from the light-emitting diode 61 intersects with the mirror surface 42 of the half mirror 41. The light shielding member 81 is provided in such a way as to partially intercept the detection light which proceeds toward the light projection/reception lens 21 from the light-emitting diode 61.

In the modification examples in Fig. 8 and Fig. 9, the portion overlapping the optical axis 106, out of the detection light proceeding toward the half mirror 41 from the light-emitting diode 61, is prevented from proceeding, by the light shielding member 31. This prevents the occurrence of reflected light proceeding toward the photodiode 51, in the light projection/reception lens 21. This prevents the reflected light induced by the light projection/reception lens 21 from forming stray light entering the photodiode 51.

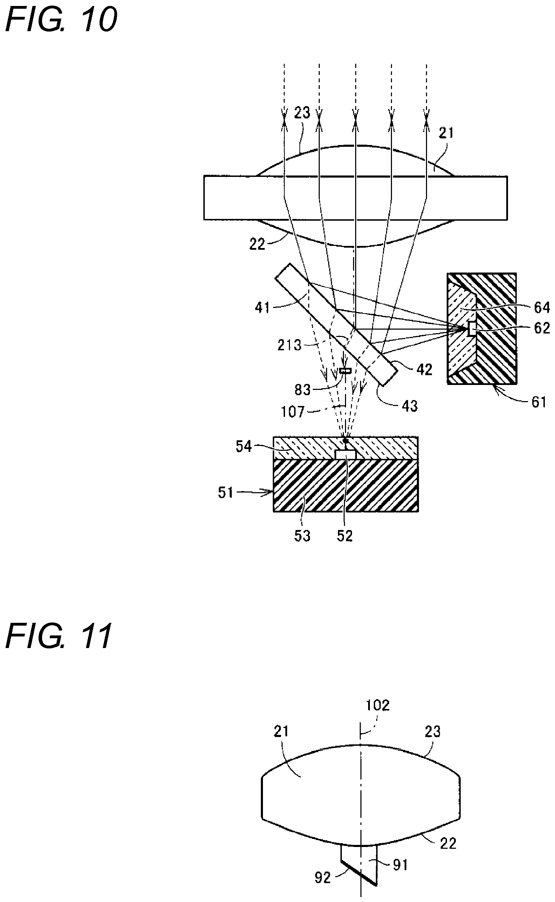

Referring to Fig. 10, in the present modification example, a light shielding member 83 is provided, instead of the light shielding member 31 in Fig. 2. The light shielding member 83 is provided on the optical axis of the returned light, between the light projection/reception lens 21 and the photodiode 51. The light shielding member 83 is provided on the optical path of the returned light, between the half mirror 41 and the photodiode 51.

The light shielding member 83 is provided such that it overlaps the optical axis of the returned light which proceeds toward the photodiode 51 from the light projection/reception lens 21. The light shielding member 83 is provided such that it overlaps the optical axis 107 of the returned light which proceeds toward the photodiode 51 from the half mirror 41. The light shielding member 83 is provided in such a way as to partially intercept the returned light which proceeds toward the photodiode 51 from the half mirror 41.

In the present modification example, the detection light proceeding toward the light projection/reception lens 21 from the light-emitting diode 61 is partially reflected by the lens surface 22 of the light projection/reception lens 21, thereby inducing reflected light. In the present embodiment, the portion proceeding on the optical axis 107, out of the reflected light, is intercepted by the light shielding member 83. This prevents the reflected light induced by the light projection/reception lens 21 from forming stray light entering the photodiode 51.

Referring to Fig. 11, in the present modification example according to the invention, a light shielding member 91 is provided, instead of the light shielding member 31 in Fig. 2. The light shielding member 91 is formed integrally with the light projection/reception lens 21. The light shielding member 91 is colored in black with a coating material, at its tip end portion 92, in order to enable the light shielding member 91 to intercept the proceeding of the detection light.

With such modification example, it is possible to reduce the number of members in the sensor head 12, which can reduce the fabrication cost for the photoelectric sensor 10.

With the photoelectric sensors having the aforementioned structures according to the second embodiment of the present invention, it is possible to similarly provide the effects described in the first embodiment.

The embodiments which have been disclosed herein are to be considered in all respects only as illustrative and not restrictive. The scope of the present invention is indicated by the claims rather than by the foregoing description.

The present invention is mainly applied to a photoelectric sensor of coaxial retro-reflective type.

## Claims

1. A photoelectric sensor (10) comprising:
a light projecting unit (61) for generating detection light;
a light receiving unit (51) for receiving the returned detection light reflected by an outside object;
a lens (21) for outputting the detection light generated from the light projecting unit (61) to the outside and to which the returned detection light from the outside can be entered;
an optical-path separation portion (41) which is provided on an optical path between the lens (21) and the light projecting unit (61) and between the lens (21) and the light receiving unit (51), and separates the optical path of the detection light which proceeds toward the lens (21) from the light projecting unit (61), from the optical path of the returned detection light which proceeds toward the light receiving unit (51) from the lens (21); and
a light shielding member (31, 81, 82, 83, 91) for partially intercepting the returned detection light or the detection light;
**characterized in that** the light shielding member (31, 81, 82, 83, 91) is provided in such a way as to overlap the optical axis of returned detection light at a position on the optical path between the lens (21) and the optical-path separation portion (41),
the light shielding member (31, 81, 82, 83, 91) is provided in such a way as to be spaced apart from the optical-path separation portion (41) and has a reflection surface (32) for reflecting the detection light proceeding toward the lens (21) from the optical-path separation portion (41), and
the reflection surface (32) extends in an oblique direction with respect to the optical axis of the detection light proceeding toward the lens (21) from the optical-path separation portion (41).

2. The photoelectric sensor (10) according to claim 1, wherein the light shielding member (31, 81, 82, 83, 91) is provided near the lens (21).

3. The photoelectric sensor (10) according to claim 1 or 2, wherein the light shielding member (31, 81, 82, 83, 91) is placed such that the center of a light-shielded area of the detection light, which is formed by the light shielding member (31, 81, 82, 83, 91), is coincident with a center axis of the lens (21).

4. The photoelectric sensor (10) according to any one of claims 1 to 3, wherein the light shielding member (31, 81, 82, 83, 91) is colored in black.

5. The photoelectric sensor (10) according to any one of claims 1 to 4, further comprising a support member (71) which supports the optical-path separation portion (41) on the optical path between the lens (21) and the light projecting unit (61) and between the lens (21) and the light receiving unit (51),
wherein the light shielding member (31, 81, 82, 83, 91) is formed integrally with the support member (71).

6. The photoelectric sensor (10) according to claim 5, wherein the support member (71) is provided with a slit (72) which is placed in such a way as to face the light projecting unit (61), and further, the slit (72) is passed therethrough the detection light proceeding toward the optical-path separation portion (41) from the light projecting unit (61).

7. The photoelectric sensor (10) according to any one of claims 1 to 4, wherein the light shielding member (31, 81, 82, 83, 91) is formed integrally with the lens (21).

## Patentansprüche

1. Photoelektrischer Sensor (10), umfassend:
eine Lichtprojektionseinheit (61) zum Erzeugen von Erfassungslicht;
eine Lichtempfangseinheit (51) zum Empfangen des zurückkehrenden Erfassungslichts, das von einem äußeren Objekt reflektiert wird;
eine Linse (21) zum Ausgeben des von der Lichtprojektionseinheit (61) erzeugten Erfassungslichts nach außen, und in welche das zurückkehrende Erfassungslicht von außen eintreten kann;
einen Strahlengangtrennabschnitt (41), der auf einem Strahlengang zwischen der Linse (21) und der Lichtprojektionseinheit (61) und zwischen der Linse (21) und der Lichtempfangseinheit (51) vorgesehen ist und den Strahlengang des Erfassungslichts, das von der Lichtprojektionseinheit (61) zur Linse (21) verläuft, von dem Strahlengang des zurückkehrenden Erfassungslichts, das von der Linse (21) zur Lichtempfangseinheit (51) verläuft, trennt; und
ein Lichtabschirmelement (31, 81, 82, 83, 91), um das zurückkehrende Erfassungslicht oder das Erfassungslicht teilweise abzufangen;
**dadurch gekennzeichnet, dass** das Lichtabschirmelement (31, 81, 82, 83, 91) so vorgesehen ist, dass es die optische Achse des zurückkehrenden Erfassungslichts an einer Position auf dem Strahlengang zwischen der Linse (21) und dem Strahlengangtrennabschnitt (41) überlappt,
das Lichtabschirmelement (31, 81, 82, 83, 91) so vorgesehen ist, dass es von dem Strahlengangtrennabschnitt (41) beabstandet ist und eine Reflexionsfläche (32) zum Reflektieren des Erfassungslichts, das von dem Strahlengangtrennabschnitt (41) zu der Linse (21) verläuft, aufweist, und
die Reflexionsfläche (32) sich in einer schrägen Richtung in Bezug auf die optische Achse des Erfassungslichts erstreckt, das von dem Strahlengangtrennabschnitt (41) zu der Linse (21) verläuft.

2. Photoelektrischer Sensor (10) nach Anspruch 1, wobei das Lichtabschirmelement (31, 81, 82, 83, 91) in der Nähe der Linse (21) vorgesehen ist.

3. Photoelektrischer Sensor (10) nach Anspruch 1 oder 2, wobei
das Lichtabschirmelement (31, 81, 82, 83, 91) so angeordnet ist, dass die Mitte eines lichtabgeschirmten Bereichs des Erfassungslichts, der durch das Lichtabschirmelement (31, 81, 82, 83, 91) gebildet wird, mit einer Mittelachse der Linse (21) zusammenfällt.

4. Photoelektrischer Sensor (10) nach einem der Ansprüche 1 bis 3, wobei das Lichtabschirmelement (31, 81, 82, 83, 91) schwarz eingefärbt ist.

5. Photoelektrischer Sensor (10) nach einem der Ansprüche 1 bis 4, ferner umfassend ein Stützelement (71), das den Strahlengangtrennabschnitt (41) auf dem Strahlengang zwischen der Linse (21) und der Lichtprojektionseinheit (61) und zwischen der Linse (21) und der Lichtempfangseinheit (51) stützt,
wobei das Lichtabschirmelement (31, 81, 82, 83, 91) einstückig mit dem Stützelement (71) ausgebildet ist.

6. Photoelektrischer Sensor (10) nach Anspruch 5, wobei
das Stützelement (71) mit einem Schlitz (72) versehen ist, der so angeordnet ist, dass er der Lichtprojektionseinheit (61) zugewandt ist, und ferner das Erfassungslicht, das von der Lichtprojektionseinheit (61) in Richtung des Strahlengangtrennabschnitts (41) verläuft, durch den Schlitz (72) hindurchgeführt wird.

7. Photoelektrischer Sensor (10) nach einem der Ansprüche 1 bis 4, wobei
das Lichtabschirmelement (31, 81, 82, 83, 91) einstückig mit der Linse (21) ausgebildet ist.

## Revendications

1. Capteur photoélectrique (10) comprenant :
une unité de projection de lumière (61) pour générer une lumière de détection ;
une unité de réception de lumière (51) pour recevoir la lumière de détection renvoyée, qui est réfléchie par un objet extérieur ;
une lentille (21) pour émettre la lumière de détection générée par l'unité de projection de lumière (61) vers l'extérieur et dans laquelle la lumière de détection renvoyée de l'extérieur peut être introduite ;
une partie de séparation de chemin optique (41) qui est prévue sur un chemin optique entre la lentille (21) et l'unité de projection de lumière (61) et entre la lentille (21) et l'unité de réception de lumière (51), et sépare le chemin optique de la lumière de détection qui se dirige vers la lentille (21) à partir de l'unité de projection de lumière (61) du chemin optique de la lumière de détection renvoyée qui se dirige vers l'unité de réception de lumière (51) à partir de la lentille (21) ; et
un élément faisant écran à la lumière (31, 81, 82, 83, 91) pour intercepter partiellement la lumière de détection renvoyée ou la lumière de détection ;
**caractérisé en ce que** l'élément faisant écran à la lumière (31, 81, 82, 83, 91) est prévu de manière à chevaucher l'axe optique de la lumière de détection renvoyée à une position sur le chemin optique entre la lentille (21) et la partie de séparation de chemin optique (41),
l'élément faisant écran à la lumière (31, 81, 82, 83, 91) est prévu de manière à être espacé de la partie de séparation de chemin optique (41) et comprend une surface de réflexion (32) pour réfléchir la lumière de détection se dirigeant vers la lentille (21) à partir de la partie de séparation de chemin optique (41), et
la surface de réflexion (32) s'étend dans une direction oblique par rapport à l'axe optique de la lumière de détection se dirigeant vers la lentille (21) à partir de la partie de séparation de chemin optique (41).

2. Capteur photoélectrique (10) selon la revendication 1, dans lequel l'élément faisant écran à la lumière (31, 81, 82, 83, 91) est prévu près de la lentille (21).

3. Capteur photoélectrique (10) selon la revendication 1 ou 2, dans lequel
l'élément faisant écran à la lumière (31, 81, 82, 83, 91) est placé de telle sorte que le centre d'une zone protégée de la lumière de détection, qui est formée par l'élément faisant écran à la lumière (31, 81, 82, 83, 91), coïncide avec un axe central de la lentille (21).

4. Capteur photoélectrique (10) selon l'une quelconque des revendications 1 à 3, dans lequel l'élément faisant écran à la lumière (31, 81, 82, 83, 91) est coloré en noir.

5. Capteur photoélectrique (10) selon l'une quelconque des revendications 1 à 4, comprenant en outre un élément de support (71) qui supporte la partie de séparation de chemin optique (41) sur le chemin optique entre la lentille (21) et l'unité de projection de lumière (61) et entre la lentille (21) et l'unité de réception de lumière (51),
dans lequel l'élément faisant écran à la lumière (31, 81, 82, 83, 91) est formé d'un seul tenant avec l'élément de support (71).

6. Capteur photoélectrique (10) selon la revendication 5, dans lequel
l'élément de support (71) est muni d'une fente (72) qui est placée de manière à faire face à l'unité de projection de lumière (61), et en outre, la lumière de détection se dirigeant vers la partie de séparation du chemin optique (41) de l'unité de projection de lumière (61) est passée à travers la fente (72).

7. Capteur photoélectrique (10) selon l'une quelconque des revendications 1 à 4, dans lequel
l'élément faisant écran à la lumière (31, 81, 82, 83, 91) est formé d'un seul tenant avec la lentille (21).
